# EUROPEAN PATENT SPECIFICATION

(11) **EP 2 830 832 B1**
(45) Date of publication and mention of the grant of the patent: **15.07.2020**
(21) Application number: 13717988.3
(22) Date of filing: 29.03.2013
(51) Int. Cl.: B25F 5/00

(54) **ELECTRIC TOOL AND FASTENING METHOD USING THE SAME**
ELEKTROWERKZEUG UND BEFESTIGUNGSVERFAHREN DAMIT
OUTIL ÉLECTRIQUE ET PROCÉDÉ DE FIXATION L'UTILISANT

(30) Priority: 29.03.2012 JP 2012077319
(43) Date of publication of application: 04.02.2015
(73) Proprietor: Koki Holdings Co., Ltd., Tokyo 108-6020 (JP)
(72) Inventor: TADOKORO, Naoki, Hitachinaka-shi Ibaraki 312-8502 (JP); IWATA, Kazutaka, Hitachinaka-shi Ibaraki 312-8502 (JP)
(74) Representative: Parker, Andrew James
(86) International application number: PCT/JP2013/060401
(87) International publication number: WO 2013/147323

(56) References cited:
- US-A1- 2003 127 932
- US-B1- 6 286 609

## Description

### Technical Field

The present invention relates to an electric tool which can be suitably used to tighten fastening parts such as screws, bolts, or nuts, for example, and a fastening method using the same.

### Background Art

Recently, a brushless motor has been used in an electric tool (for example, an impact driver) which performs a desired work by rotationally driving a tip tool such as a drill or a driver by a motor. A rotation number of the brushless motor can be finely controlled by a microcomputer mounted on a control board. A configuration of the impact driver is disclosed in JP 2010-099823, for example. Another electric tool is disclosed in US6,286,609.

In a case of an impact driver in which a commercial power supply of AC 100V, for example, is full-wave rectified and a brushless motor is driven without a smoothing-condenser, a rotational variation is caused by the pulsation of a drive voltage (full-wave rectification wave) and thus it is difficult to determine whether the rotational variation is caused by striking or caused by the pulsation of the drive voltage. Then, there is a problem that it is not possible to accurately perform a single-shot mode function to stop the motor by a predetermined number of times of striking after striking is started, for example. The same problem can be caused also in a case where the capacity of the smoothing-condenser is small. A case when a smoothing-condenser is not used or a smoothing-condenser having a small capacity is used may be referred to as a smoothing-condenserless.

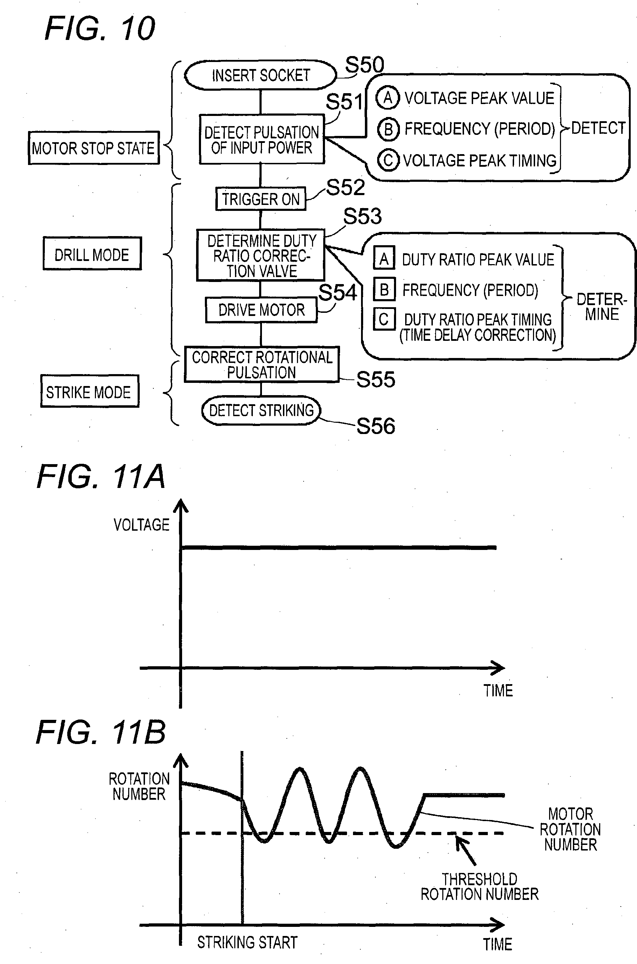

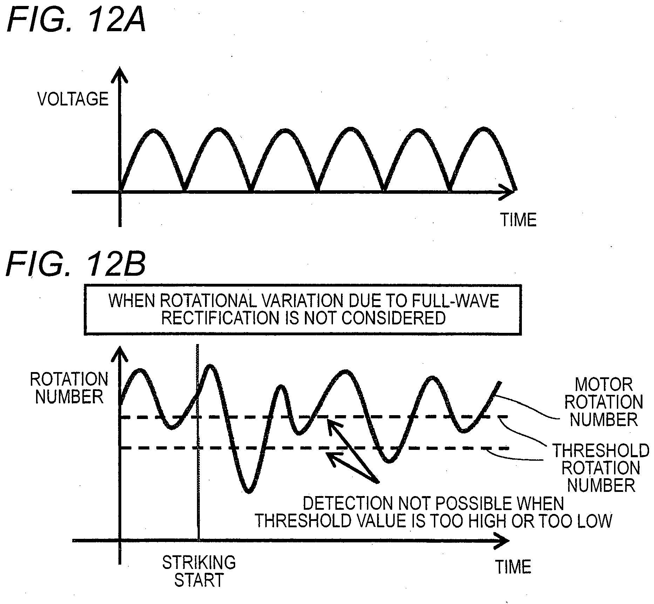

Fig. 11A is a waveform diagram of a drive voltage in an impact driver of DC drive and Fig. 11B is a rotation number graph showing both a motor rotation number and a threshold rotation number over time before and after striking is started in the same impact driver. The rotation number is a temporary rotation number which is determined from a rotation number (or a rotation angle) per unit time which is extremely short (The same is also applied to Fig. 12). Since the drive voltage is constant in a case of the DC drive, it is possible to easily detect the rotational variation (that is, decrease in the rotation number) generated by striking if the threshold value (hereinafter, also referred to as a "threshold rotation number") of rotation number for striking detection is set as indicated by dashed line in Fig. 11B, for example. In order words, it is possible to accurately detect the striking from the rotational variation.

Fig. 12A is a waveform diagram of a drive voltage in an impact driver of the full-wave rectification wave drive (smoothing-condenserless) and Fig. 12B is a rotation number graph showing both a motor rotation number and a threshold rotation number over time after striking is started in the same impact driver. In a case of the full-wave rectification wave drive, the decrease in the rotation number due to a valley of the full-wave rectification wave may be erroneously detected as the decrease by the striking when the threshold rotation number is increased too high. On the contrary, when the threshold rotation number is decreased too low, the rotational variation (that is, decrease in the rotation number) generated by the striking may be overlooked depending on a mountain of the full-wave rectification wave and a striking timing. Accordingly, it is difficult or impossible realistically to set the threshold rotation number to a number for accurately performing the single-shot mode function.

### Summary of Invention

The present invention has been made to solve the above-described problems and an object of the present invention is to provide an electric tool capable of reducing variation in a rotation number of a motor due to pulsation of voltage supplied to a motor drive circuit, and a fastening method using the same.

### Solution to Problem

According to an aspect of the present invention, there is provided an electric tool in which a pulsating input voltage is inputted to a drive circuit of a motor, characterized in that the electric tool includes: a control part configured to vary output power or output voltage supplied to the motor from the drive circuit in accordance with the pulsation of the input voltage inputted to the drive circuit.

According to another aspect of the present invention, there is provided an electric tool configured to be operated by power supplied from an AC power supply, the electric tool including: a motor; a motor drive circuit configured to drive the motor; a control part configured to control the motor drive circuit; and a rotation speed detection unit configured to detect a rotation speed of the motor, characterized in that the control part includes: a PWM control unit configured to control switching elements of the motor drive circuit by a PWM signal, a correction parameter generating unit configured to generate a correction parameter for varying a duty ratio of the PWM signal to reduce variation in the rotation speed of the motor due to pulsation of voltage supplied to the motor drive circuit, and a rotation speed condition determining unit configured to determine whether the rotation speed of the motor detected by the rotation speed detection unit satisfies a predetermined condition or not.

According to another aspect of the present invention, there is provided a fastening method by an electric tool, the method including: a drill mode step in which a tip tool is continuously rotated by rotating a motor by pulsating drive voltage and a fastening member is tightened by the tip tool; a correction parameter derivation step in which a correction parameter for varying a duty ratio of a PWM signal for driving switching elements of a motor drive circuit to reduce variation in the rotation speed of the motor due to pulsation of the drive voltage is derived, after a power supply is turned on or during the drill mode step; a strike mode step in which the tip tool is rotated by a rotational striking force using the rotation of the motor and the fastening member is further tightened by the tip tool, after the drill mode step; and a rotation speed condition determining step in which whether the rotation speed of the motor satisfies a predetermined condition or not is determined, during the strike mode step, wherein the correction parameter is derived in the correction parameter derivation step, on the basis of a frequency and a phase of voltage supplied to the motor drive circuit.

### Advantageous Effects of Invention

According to the present invention, it is possible to realize an electric tool capable of reducing the variation in the rotation number of the motor due to the pulsation of voltage supplied to the motor drive circuit, and a fastening method using the same.

### Brief Description of Drawings

Fig. 1 is a side cross-sectional view showing an inner configuration of an electric tool 1 according to an illustrative embodiment of the present invention;
Fig. 2 is a block diagram showing a configuration of a drive control system of a motor 3 in the electric tool 1;
Fig. 3 is a schematic flowchart showing an operation of the electric tool 1;
Fig. 4A is a waveform diagram of a drive voltage (voltage supplied to an inverter circuit 47) in a method 1 of the illustrative embodiment and Fig. 4B is a rotation number graph showing both a rotation number of the motor 3 and a threshold rotation number over time after striking is started in the illustrative embodiment;
Fig. 5 is a flowchart showing an operation in the method 1 of the illustrative embodiment;
Fig. 6A is a waveform diagram of a drive voltage (voltage supplied to the inverter circuit 47) in a method 2 of the illustrative embodiment, Fig. 6B is a graph showing the change of a rotation number correction amount over time in the method 2, and Fig. 6C is a characteristic diagram showing a relationship between a peak value of voltage supplied to the inverter circuit 47 and a peak value of the rotation number correction amount (when current is large and when current is small);

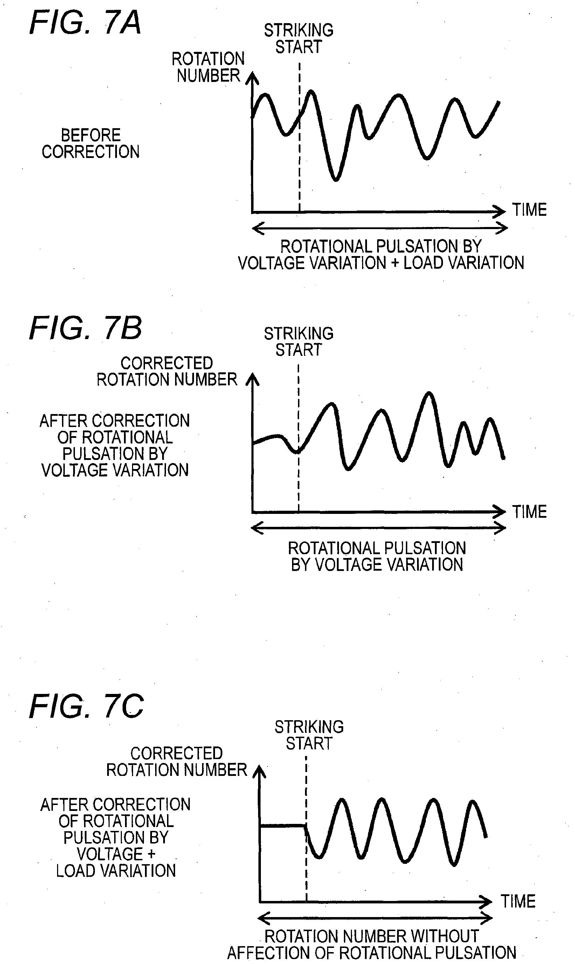

Fig. 7A is a graph showing the change of a rotation number (before correction) of the motor 3 over time, Fig. 7B is a graph the change of the corrected rotation number over time in a case where only the influence of the pulsation of voltage supplied to the inverter circuit 47 is corrected by the rotation number correction amount, and Fig. 7C is a graph (ideal waveform) the change of the corrected rotation number over time in a case where not only the influence of the pulsation of voltage supplied to the inverter circuit 47 and but also the influence of load variation is corrected by the rotation number correction amount;
Fig. 8 is a flowchart showing an operation in the method 2 of the illustrative embodiment;
Fig. 9A is a waveform diagram of a drive voltage (voltage supplied to the inverter circuit 47) in a method 3 of the illustrative embodiment, Fig. 9B is a graph showing the change of a duty ratio correction amount over time in the method 3, and Fig. 9C is a characteristic diagram showing a relationship between a peak value of voltage supplied to the inverter circuit 47 and a variation range of the duty ratio correction amount (when trigger pulling amount is large and when trigger pulling amount is small);
Fig. 10 is a flowchart showing an operation in the method 3 of the illustrative embodiment;
Fig. 11A is a waveform diagram of a drive voltage in an impact driver of DC drive and Fig. 11B is a rotation number graph showing both a motor rotation number and a threshold rotation number over time before and after striking is started in the same impact driver; and
Fig. 12A is a waveform diagram of a drive voltage in an impact driver of the full-wave rectification wave drive and Fig. 12B is a rotation number graph showing both a motor rotation number and a threshold rotation number over time after striking is started in the same impact driver.

### Description of Embodiment

Hereinafter, a preferred embodiment of the present invention will be described by referring to the accompanying drawings. The same or similar reference numerals are applied to the same or similar parts and elements throughout the drawings, and the duplicated description thereof will be omitted. Further, the embodiment is illustrative and not intended to limit the present invention. It should be noted that all the features and their combinations described in the embodiment are not necessarily considered as an essential part of the present invention.

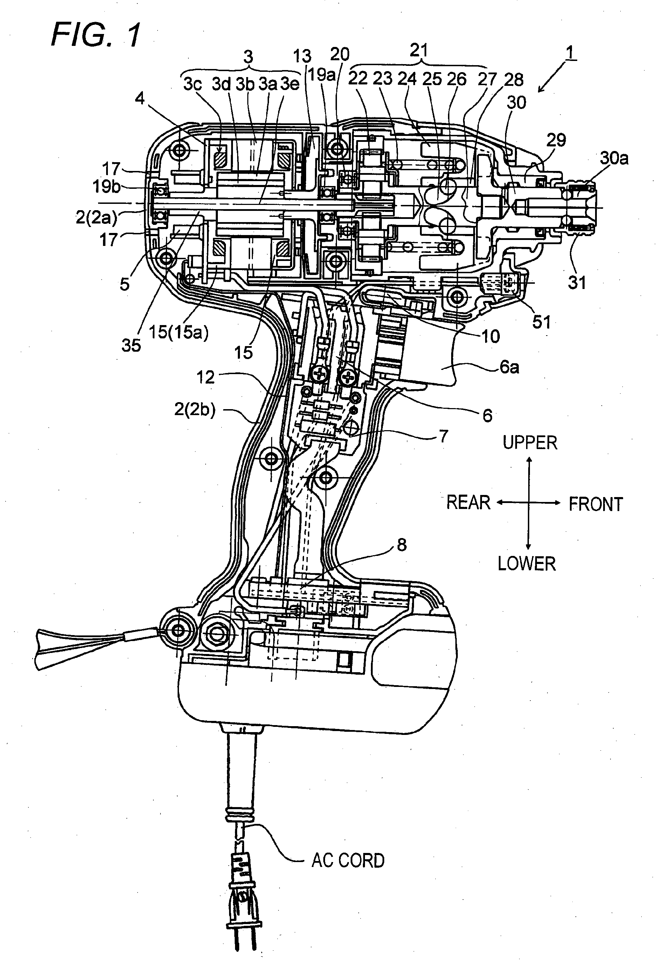

Fig. 1 is a side cross-sectional view showing an inner configuration of an electric tool 1 according to an illustrative embodiment of the present invention. For example, the electric tool 1 is an impact driver which is operated by connecting an AC cord to an AC power supply such as a commercial power supply. Although a known mechanical configuration for rotationally driving a tip tool may be used in the impact driver, an example thereof will be described as follows.

The electric tool 1 is powered by the AC power supply such as a commercial power supply and uses a motor 3 as a driving source to drive a rotary striking mechanism 21. The electric tool 1 applies a rotating force and a striking force to an anvil 30 which is an output shaft. The electric tool 1 intermittently transmits a rotational striking force to a tip tool (not shown) such as a driver bit to fasten a screw or a bolt. The tip tool is held on an mounting hole 30a which is covered with a sleeve 31.

The brushless type motor 3 (for example, 4-pole, 6-coil type or 2-pole, 3-coil type) is accommodated in a cylindrical trunk part 2a of a housing 2 which is substantially T-shaped, as seen from a side view. A rotating shaft 3e of the motor 3 is rotatably maintained by a bearing 19a (bearing member) and a bearing 19b (bearing member). The bearing 19a is provided near the center of the trunk part 2a of the housing 2 and the bearing 19b is provided on a rear end side thereof. A rotor fan 13 is provided in front of the motor 3. The rotor fan 3 is mounted coaxially with the rotating shaft 3e and rotates in synchronous with the motor 3. An inverter circuit board 4 for driving the motor 3 is arranged in the rear of the motor 3. Air flow generated by the rotor fan 13 is introduced into the trunk part 2a through an air inlet 17 formed on a rear side of the trunk part 2a of the housing 2 and an air inlet (not shown) formed on a portion of the housing around the inverter circuit board 4. And then, the air flow mainly flows to pass through between a rotor 3a and a stator core 3b and between the stator core 3b and an inner periphery of the trunk part 2a. Further, the air flow is sucked form the rear of the rotor fan 13 and flows in the radial direction of the rotor fan 13. Then, the air flow is discharged to the outside of the housing 2 through an air outlet (not shown) formed to a portion of the housing at the circumference of the rotor fan 13.

The inverter circuit board 4 is a ring-shaped multilayer board having a diameter substantially equal to an outer shape of the motor 3. A plurality of switching elements 5 such as FETs (Field Effect Transistor), a position detection element such as hall IC, or other electronic elements are mounted on the inverter circuit board 4. An insulator 15 made of an insulating material is provided between the stator core 3b and a stator coil 3c and the inverter circuit board 4 is fixed to an protruding part 15a of the insulator 15 by screws or the like. A plastic spacer 35 is provided between the rotor 3a and the bearing 19b. The spacer 35 is formed in an approximately cylindrical shape and arranged to keep a gap between the bearing 19b and the rotor 3a to be constant.

A handle part 2b extends nearly at a right angle from and integrally with the trunk part 2a of the housing 2. A trigger switch 6 is provided on an upper side region of the handle part 2b. A switch board 7 is provided below the trigger switch 6. A control circuit board 8 is accommodated in a lower side region of the handle part 2b. The control circuit board 8 has a function to control the speed of the motor 3 by an operation of pulling a trigger 6a. The control circuit board 8 is electrically connected to the AC power supply and the trigger switch 6 via the AC cord. The control circuit board 8 is connected to the inverter circuit board 4 via a signal line 12. A battery mounting part 2c is provided below the handle part 2b.

The rotary striking mechanism 21 includes a planetary gear reduction mechanism 22, a spindle 27 and a hammer 24. A rear end of the rotary striking mechanism is held by a bearing 20 and a front end thereof is held by a metal bearing 29. As the trigger 6a is pulled and thus the motor 3 is activated, the motor 3 starts to rotate in a direction set by a forward/reverse switching lever 10. The rotating force of the motor is reduced by the planetary gear reduction mechanism 22 and transmitted to the spindle 27. Accordingly, the spindle 27 is rotationally driven in a predetermined speed. Here, the spindle 27 and the hammer 24 are connected to each other by a cam mechanism. The cam mechanism includes a V-shaped spindle cam groove 25 formed on an outer peripheral surface of the spindle 27, a hammer cam groove 28 formed on an inner peripheral surface of the hammer 24 and a ball 26 engaged with these cam grooves 25, 28.

The hammer 24 is constantly urged forward by a spring 23. The hammer 24 is located at a position spaced away from an end surface of the anvil 30 by an engagement of the ball 26 and the cam grooves 25, 28 in a stationary state. Respective convex portions (not shown) are symmetrically formed in two places on the rotation planes of the hammer 24 and the anvil 30 which are opposed to each other.

As the spindle 27 is rotationally driven, the rotation of the spindle is transmitted to the hammer 24 via the cam mechanism. At this time, since the convex portion of the hammer 24 is engaged with the convex portion of the anvil 30 when the hammer 24 does not make a half turn, the anvil 30 is rotated. However, in a case where the relative rotation between the spindle 27 and the hammer 24 occurs due to an engaging reaction force at that time, that is, in a case where a large load is applied to the anvil 30 (tip tool) and thus the anvil 30 is locked so that the hammer 24 and the anvil 30 cannot be rotated integrally, the hammer 24 starts to retreat toward the motor 3 while compressing the spring 23 along the spindle cam groove 25 of the cam mechanism. Further, when the engaging reaction force (load) is small, the hammer 24 and the protruding part of the anvil 30 are engaged with each other and rotated integrally, thereby serving as a drill mode.

When the convex portion of the hammer 24 goes beyond the convex portion of the anvil 30 by the retreating movement of the hammer 24 and thus engagement between these convex portions is released, the hammer 24 is rapidly accelerated in a rotation direction and also in a forward direction by the elastic energy accumulated in the spring 23 and the action of the cam mechanism, in addition to the rotation force of the spindle 27. Further, the hammer 24 is displaced in a forward direction by an urging force of the spring 23 and the convex portion of the hammer 24 is again engaged with the convex portion of the anvil 30. Thereby, the hammer starts to rotate integrally with the anvil. At this time, since a powerful rotational striking force is applied to the anvil 30, the rotational striking force is transmitted to a screw via a tip tool (not shown) mounted on the mounting hole 30a of the anvil 30. Thereafter, the same operation is repeatedly performed and thus the rotational striking force is intermittently and repeatedly transmitted from the tip tool to the screw. Thereby, the screw can be screwed into a member to be fastened (not shown) such as wood, for example. As such, when the engaging reaction force (load) is large, the hammer 24 is adapted to strike the anvil 30 to transmit the rotational striking force intermittently, thereby serving as a strike mode. A light 51 irradiates a tip side of the tip tool and the member to be fastened.

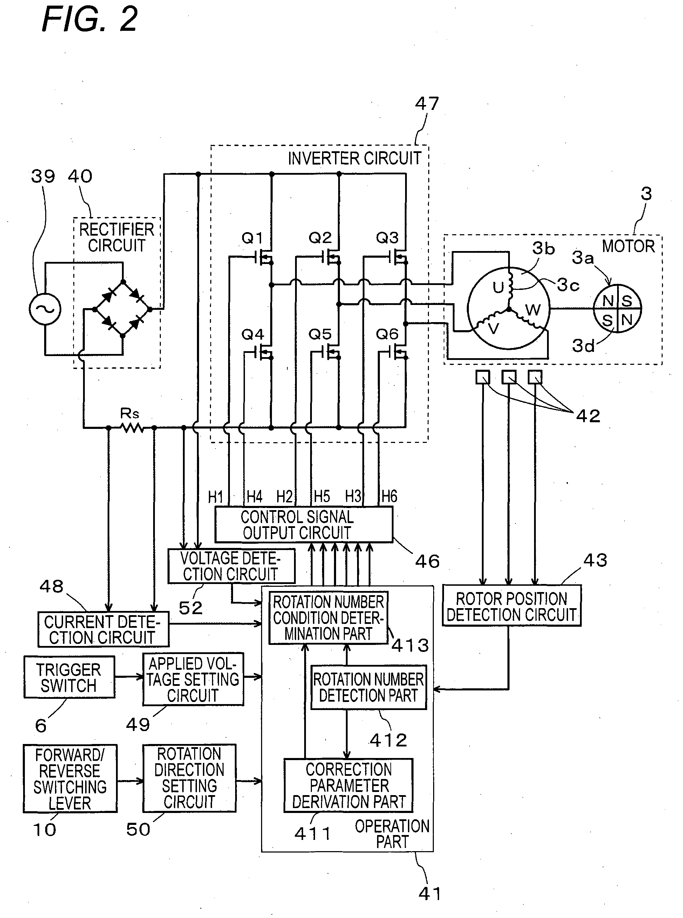

Fig. 2 is a block diagram showing a configuration of a drive control system of the motor 3 in the electric tool 1 shown in Fig. 1. In the present embodiment, voltage supplied from an AC power supply 39 such as a commercial power supply is converted to, for example, full-wave rectified wave by a rectifier circuit 40 and supplied to the inverter circuit 47 as a motor drive circuit without a smoothing-condenser. The motor 3 is a three phase brushless motor, for example. The motor 3 is a so-called inner rotor type and includes the rotor 3a, the stator and three position detection elements 42. The rotor 3a includes a rotor magnet 3d which has a plurality of sets (two sets in the present embodiment) of N-pole and S-pole. The stator includes the stator core 3b and the stator coil 3c which is composed of the star-connected three-phase stator windings U, V W. The three position detection elements 42 are arranged at a predetermined interval (for example, an angle of 60°) in the circumferential direction to detect the rotation position of the rotor 3a. The current flowing direction and time to the stator windings U, V and W are controlled based on the rotation position detection signal from the position detection elements 42 and the motor 3 is rotated. The position detection elements 42 are provided at positions on the inverter circuit board 4 opposing the rotor 3a.

Electronic elements mounted on the inverter circuit board 4 include six switching elements 5 (Q1 to Q6) such as FETs (Field Effect Transistor) which are connected to form a three-phase bridge. Each gate of the six switching elements Q1 to Q6 connected to form a three-phase bridge is connected to a control signal output circuit 46 mounted on a control circuit board 8. And, each drain or each source thereof is connected to the star-connected stator windings U, V and W. Thereby, the six switching elements Q1 to Q6 perform a switching operation in accordance with a switching element driving signal (HI to H6) inputted from the control signal output circuit 46. In this way, voltage (full-wave rectification wave) applied to the inverter circuit 47 is supplied to the stator windings U, V and W as three-phase (U phase, V phase and W phase) voltages Vu, Vv and Vw.

Out of the switching element driving signals (three-phase signals) for driving each gate of the switching elements, the switching element driving signals for driving gate of low-side switching elements Q4, Q5 and Q6 are supplied as pulse width modulation signals (PWM signals) H4, H5 and H6. An operation part 41 mounted on the control circuit board 8 changes the pulse widths (duty ratios) of the PWM signals based on the detection signal of the trigger operation amount (stroke) of the trigger switch 6 to adjust a power supply amount to the motor 3, thereby controlling the start/stop and the rotation speed of the motor 3.

Here, the PWM signals may be supplied to either of the high-side switching elements Q1 to Q3 of the inverter circuit 47 or the low-side switching elements Q4 to Q6 thereof. The switching elements Q1 to Q3 or the switching elements Q4 to Q6 are switched at a high speed. As a result, the power supplied to each of the stator windings U, V and W can be controlled. Further, in the present embodiment, since the PWM signals are supplied to the low-side switching elements Q4 to Q6, it is possible to adjust the electric power supplied to each of the stator windings U, V and W by controlling the pulse widths of the PWM signals. Further, the electric power supplied to each of the stator windings U, V and W are controlled, whereby the rotation speed of the motor 3 can be controlled. Further, the switching elements 5 (Q1 to Q6) are provided at a position on the inverter circuit board 4 which is opposite to the air inlet 17. The switching elements generates heat by a high-speed switching but can be effectively cooled.

The electric tool 1 is provided with a forward/reverse switching lever 10 for switching the rotation direction of the motor 3. A rotation direction setting circuit 50 switches the rotation direction of the motor at every time when the change of the forward/reverse switching lever 10 is detected and transmits a control signal thereof to the operation part 41. The operation part 41 is a micro-computer. Although not shown, the operation part 41 includes a central processing unit (CPU) for outputting the driving signals based on a processing program and data, a ROM for storing the processing program and the control data, a RAM for temporarily storing the data, and a timer, etc.

The control signal output circuit 46 generates the driving signals for alternately switching the predetermined switching elements Q1 to Q6 based on the output signals from the rotation direction setting circuit 50 and a rotor position detection circuit 43, in accordance with the control of the operation part 41. Thereby, the current is alternately energized to the predetermined coil of the stator windings U, V, W and thus the rotor 3a rotates in a set rotational direction. In this case, the driving signals to be applied to the low-side switching elements Q4 to Q6 are outputted as the PWM modulation signals based on the output control signals of an applied voltage setting circuit 49. The value of current (flowing through the resistance Rs) supplied to the motor 3 is measured by a current detection circuit 48 and then the measured value is fed back to the operation part 41, whereby the driving power supplied to the motor is adjusted so as to be a set value. The PWM signals may be applied to the high-side switching elements Q1 to Q3.

Hereinafter, single-shot mode function in the present embodiment will be described. Single-shot mode function refers to a function to stabilize the fastening torque by stopping the motor by a predetermined number of times of striking after striking is started. Relating to the single-shot mode function, the operation part 41 includes a correction parameter derivation part 411, a rotation number detection part 412 and a rotation number condition determination part 413. The correction parameter derivation part 411 determines a voltage peak value, a frequency and a phase of the full-wave rectification wave supplied to the inverter circuit 47 on the basis of the output signals of a voltage detection circuit 52 and derives (calculates) a correction parameter (will be described later). In the present embodiment, in order to cancel the rotation number variation of the motor 3 due to the pulsation of voltage supplied to the inverter circuit 47 when performing the single-shot mode function, the following three methods are proposed.

### Method 1. Introduction of varied threshold rotation number

In the present method, the correction parameter derived by the correction parameter derivation part 411 is a parameter for deriving a varied threshold rotation number which is varied in synchronous with the pulsation of voltage (full-wave rectification wave) supplied to the inverter circuit 47. For example, the correction parameter includes a median value, an amplitude, a frequency, and a phase or the like of the varied threshold rotation number. When deriving the correction parameter, the torque or rotation number (a peak value, a minimum value, a frequency and a phase or the like of the pulsation) of the motor 3 before striking is started (during screw fastening in a drill mode) may be used. The torque is determined by a current measurement value in the current detection circuit 48. The rotation number is determined by the rotation number detection part 412 based on the output signal of the rotor position detection circuit 43. The rotation number is a temporary rotation number which is determined from a rotation number (or a rotation angle) per unit time which is extremely short (hereinafter, the same is applied).

The rotation number condition determination part 413 compares a varied threshold rotation number which is varied by the correction parameter derived in the correction parameter derivation part 411 and a rotation number of the motor 3 which is detected in the rotation number detection part 412 and determines whether the rotation number of the motor 3 falls below the varied threshold rotation number or not. When the rotation number of the motor 3 falls below the varied threshold rotation number by N times (N is an integer of 2 or more), the operation part 41 stops the motor 3 (the control signal output circuit 46 switches off the switching elements Q1 to Q6). Counting of the N times is performed in such a way that one time is counted when the rotation number of the motor 3 is migrated from a value not less than the varied threshold rotation number to a value less than the varied threshold rotation number and the number of time is not added when a state of being less than the varied threshold rotation number continues.

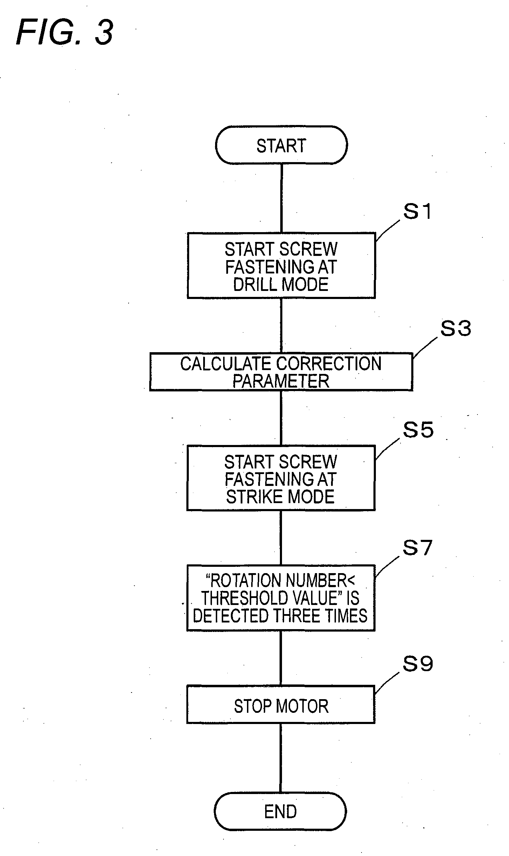

Fig. 3 is a schematic flowchart showing an operation of the electric tool 1 in the method 1 of the present embodiment.

As the trigger 6a is pulled by a user, a screw fastening is started at a drill mode where the tip tool is continuously rotated by the rotation of the motor 3 (S1 in Fig. 3). During the execution of the drill mode, the correction parameter derivation part 411 calculates a correction parameter (S3 in Fig. 3). Meanwhile, the correction parameter derivation part 411 may determine a peak value, a frequency and a phase of voltage supplied to the inverter circuit 47 after a commercial power supply is supplied and before the screw fastening is started at the drill mode and calculate the correction parameter prior to the start of the screw fastening at the drill mode. When the screw fastening is advanced in the drill mode, the screw is seated and the torque is increased. When the torque becomes larger than a predetermined value, the drill mode is migrated to a strike mode (S5 in Fig. 3). In the strike mode, the tip tool is rotated by a rotational striking force using the rotation of the motor 3. During the execution of the strike mode, the rotation number condition determination part 413 frequently compares the varied threshold rotation number which is varied by the correction parameter derived in the correction parameter derivation part 411 and the rotation number of the motor 3 which is detected in the rotation number detection part 412 and determines whether the rotation number of the motor 3 falls below the varied threshold rotation number or not. Here, when the rotation number of the motor 3 detected in the rotation number detection part 412 falls below the varied threshold rotation number by three times (S7 in Fig. 3), the motor 3 is stopped (S9 in Fig. 3).

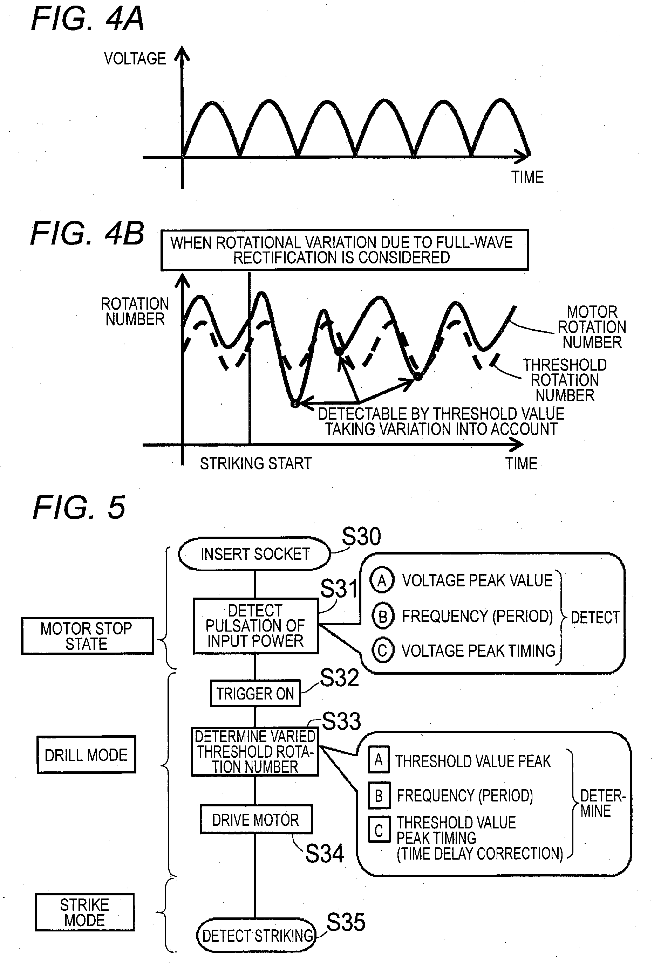

Fig. 4A is a waveform diagram of a drive voltage (voltage supplied to an inverter circuit 47) in the method 1 of the present embodiment and Fig. 4B is a rotation number graph showing both the rotation number of the motor 3 and the varied threshold rotation number over time before and after striking is started in the method 1 of the present embodiment. The waveform of Fig. 4A is the same as that of Fig. 12.

As shown in Fig. 4B, in the present embodiment, the threshold rotation number is varied over time by the correction parameter derived in the correction parameter derivation part 411. Here, the varied threshold rotation number is varied in a sinusoidal form. Variation cycle is adapted to be consistent with the pulsation cycle of the full-wave rectification wave supplied to the inverter circuit 47. Further, mountains of the full-wave rectification wave (mountains of the pulsation of the rotation number) and mountains of the varied threshold rotation number, and valleys of the full-wave rectification wave (valleys of the pulsation of the rotation number) and valleys of the varied threshold rotation number are adapted to be substantially consistent with each other over time. That is, since the variation of the full-wave rectification wave is substantially in conjunction with the variation of the rotation number, the threshold rotation number is varied in the sinusoidal form so as to be in conjunction with the variation of the rotation number before the striking is started (at the drill mode). The variation range (amplitude) of the varied threshold rotation number is determined by the correction parameter derivation part 411 based on at least one of a peak value of the full-wave rectification wave and the torque and rotation number of the motor 3 during the execution of the drill mode. For example, the peak value of the full-wave rectification wave and the variation range (amplitude) of the varied threshold rotation number have a proportional relationship and a proportional constant thereof is varied by the torque (current) of the motor 3 during the execution of the drill mode. In this instance, there is positive correlation in which as the torque (current) of the motor 3 is increased, the proportional constant is also increased.

Specifically, description is made with reference to the flowchart of Fig. 5. A power plug of the electric tool 1 is connected to a commercial power supply by a user (S30). Input voltage (supply voltage) from the AC power supply 39 is converted to the full-wave rectification wave by the rectifier circuit 40 and supplied to the inverter circuit 47. At this time, voltage of the full-wave rectification wave is detected by the voltage detection circuit 52. Based on the output signal from the voltage detection circuit 52, the operation part 41 determines (detects) a voltage peak value, a frequency (a period between the voltage peak values) and a voltage peak timing (a phase) of the full-wave rectification wave supplied to inverter circuit 47, from the full-wave rectification wave shown in Fig. 4A (S31). The process of S31 is performed in a state where the power plug is connected to the commercial power supply, that is, in a state where the motor 3 is stopped.

Next, when the trigger 6a is operated by a user (S32), the operation part 41 (the correction parameter derivation part 411) determines the varied threshold rotation number which is compared with the rotation number of the motor 3 detected in the rotation number detection part 412 by the rotation number condition determination part 413 based on the parameters (the voltage peak value, the period and the phase) detected in S31 (S33) and drives the motor 3 (S34).

As a result, although the rotation number of the motor 3 is pulsated by the influence of the pulsation of the input voltage, since the threshold rotation number is pulsated in accordance with the pulsation of the input voltage, it is possible to accurately detect the striking (S35).

According to the present method, the following effects can be obtained.

Since the varied threshold rotation number is decreased in accordance with the valleys of the full-wave rectification wave, it is possible to reduce possibility that the decrease in the rotation number due to the valleys of the full-wave rectification wave is erroneously detected as the decrease by the striking, as compared to a case where the threshold rotation number is constant. That is, it is possible to reduce the influence of the valleys of the full-wave rectification wave on the decrease in the rotation number. Further, since the varied threshold rotation number is increased in accordance with the mountains of the full-wave rectification wave, it is possible to reduce possibility that the rotational variation (that is, decrease in the rotation number) generated by the striking is overlooked due to the matching of mountains of the full-wave rectification wave and striking timing. That is, it is possible to reduce the influence of the mountains of the full-wave rectification wave on the increase in the rotation number. Specifically, when determining whether the rotation number of the motor 3 satisfies a predetermined condition or not, it is possible to reduce the influence of the pulsation of the supply voltage (power) to the inverter circuit 47 on the rotation number variation of the motor 3. Accordingly, single-shot mode function can be accurately performed (that is, the motor 3 can be stopped at accurate striking times in the strike mode), so that it is possible to increase the precision of final screw fastening torque. For example, it is possible to prevent over-tightening or less-tightening of the screw.

Further, in the case where the threshold rotation number is calculated on the basis of at least one of the torque and rotation number of the motor 3 during screw fastening in the drill mode and the supply voltage to the inverter circuit 47, it is possible to properly determine the average value (median value) or the variation range of the threshold rotation number in accordance with the nature of material, as compared to a case where the same threshold rotation number is used every times. Further, load variation of the rotation number of the motor 3 during screw fastening in the drill mode is small, as compared to the strike mode. Accordingly, by varying the threshold rotation number in accordance with the load variation of the rotation number of the motor 3 in the drill mode or an unloaded condition, there is an effect for cancelling variation amount (that is, the rotation number variation of the motor due variation of the full-wave rectification wave) of the rotation number of the motor 3 in the drill mode, during the strike mode. Consequently, it is possible to perform an accurate striking detection.

### Method 2. Introduction of corrected rotation number

In this case, differences between the method 1 and the method 2 are mainly described and descriptions of common points therebetween are omitted. Unlike the method 1 in which the threshold rotation number is varied, in the method 2, the threshold rotation number is not varied. According to the method 2, the rotation number of the motor 3 detected in the rotation number detection part 412 is corrected by the correction parameters prior to comparing with the threshold rotation number. Specifically, in the method 2, the correction parameters derived by the correction parameter derivation part 411 are parameters for deriving a rotation number correction amount (rotation number correction amount varying in synchronous with the pulsation of voltage supplied to the inverter circuit 47) to correct the rotation number of the motor 3 detected in the rotation number detection part 412. For example, the correction parameters include a median value, an amplitude, a frequency and a phase of the rotation number correction amount. The rotation number correction amount may be a rotation number which is added or subtracted from the rotation number of the motor 3 detected in the rotation number detection part 412 or may be a correction factor which is multiplied thereto.

The flowchart of the method 1 shown in Fig. 3 can be similarly applied to the method 2 except that the contents of the correction parameters are different. During the execution of the strike mode, the rotation number condition determination part 413 compares the corrected rotation number, which is obtained by correcting the rotation number of the motor 3 by the rotation number correction amount, and the threshold rotation number and determines whether the corrected rotation number falls below the threshold rotation number or not (S37 in Fig. 3). In this instance, when the corrected rotation number falls below the threshold rotation number by three times (S7 in Fig. 3), the motor 3 is stopped (S9 in Fig. 3). The threshold rotation number may be constant over time.

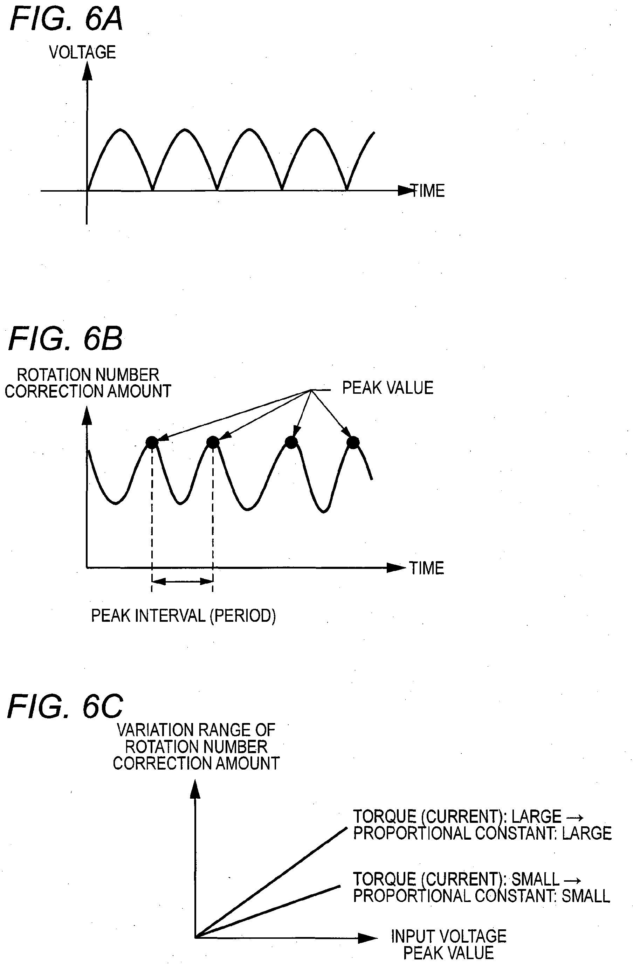

Fig. 6A is a waveform diagram of a drive voltage (voltage supplied to the inverter circuit 47) in the method 2 of the present embodiment, Fig. 6B is a graph showing the change of the rotation number correction amount over time in the method 2, and Fig. 6C is a characteristic diagram showing a relationship between a peak value of voltage supplied to the inverter circuit 47 and a peak value of the rotation number correction amount (when current is large and when current is small). The waveform of Fig. 6A is the same as that of Fig. 4A in the method 1. As shown in Fig. 6B, in the present embodiment, the rotation number correction amount is varied over time. Here, the rotation number correction amount is varied in a sinusoidal form. Variation cycle of the rotation number correction amount is adapted to be consistent with pulsation cycle of the full-wave rectification wave supplied to the inverter circuit 47. Further, mountains of the full-wave rectification wave and valleys of the rotation number correction amount, and valleys of the full-wave rectification wave and mountains of the rotation number correction amount are adapted to be substantially consistent with each other over time. The reason is as follows. Since the rotation number of the motor 3 is substantially synchronous with the variation of the full-wave rectification wave (since the mountains of the full-wave rectification wave and the mountains of the rotation number, and the valleys of the full-wave rectification wave and the valleys of the rotation number are substantially consistent with each other), it is possible to eliminate the influence of the variation of the full-wave rectification wave by causing the rotation number correction amount to be lower (to be in a valley) when the rotation number is higher (in a mountain) and causing the rotation number correction amount to be higher (to be in a mountain) when the rotation number is lower (in a valley). Thereby, the variation of the corrected rotation number due to the pulsation of the supply voltage (power) to the inverter circuit 47 is reduced, as compared to the rotation number of the motor 3. The variation range (amplitude) of the rotation number correction amount is determined by the correction parameter derivation part 411 based on at least one of a peak value of the full-wave rectification wave and the torque and rotation number of the motor 3 during the execution of the drill mode. For example, as shown in Fig. 6C, the peak value of the full-wave rectification wave and the variation range (amplitude) of the rotation number correction amount have a proportional relationship and a proportional constant thereof is varied by the torque (current) of the motor 3 during the execution of the drill mode. In this instance, there is positive correlation in which as the torque (current) of the motor 3 is increased, the proportional constant is also increased.

According to the present method, following effects can be obtained.

Since the rotation number correction amount is increased in accordance with the valleys of the full-wave rectification wave, it is possible to reduce possibility that the decrease in the rotation number due to the valleys of the full-wave rectification wave is erroneously detected as the decrease by the striking, as compared to a case where the rotation number of the motor 3 detected in the rotation number detection part 412 is used without correction. That is, it is possible to reduce the influence of the valleys of the full-wave rectification wave on the decrease in the rotation number. Further, since the rotation number correction amount is decreased in accordance with the mountains of the full-wave rectification wave, it is possible to reduce possibility that the rotational variation (that is, decrease in the rotation number) generated by the striking is overlooked due to the matching of mountains of the full-wave rectification wave and striking timing. That is, it is possible to reduce the influence of the mountains of the full-wave rectification wave on the increase in the rotation number. Specifically, when it is determined whether the rotation number of the motor 3 satisfies a predetermined condition or not, it is possible to reduce the influence of the pulsation of the supply voltage (power) to the inverter circuit 47 on the rotation number variation of the motor 3. Accordingly, single-shot mode function can be accurately performed (that is, the motor 3 can be stopped at accurate striking times in the strike mode), so that it is possible to increase the precision of final screw fastening torque. For example, it is possible to prevent over-tightening or less-tightening of the screw.

Fig. 7A is a graph showing the change of a rotation number (before correction) of the motor 3 over time. Fig. 7B is a graph showing the change of the corrected rotation number over time in a case where only the influence of the pulsation of voltage supplied to the inverter circuit 47 is corrected by the rotation number correction amount. Fig. 7C is a graph (ideal waveform) showing the change of the corrected rotation number over time in a case where not only the influence of the pulsation of voltage supplied to the inverter circuit 47 and but also the influence of load variation is corrected by the rotation number correction amount. When compared with the rotation number before the correction shown in Fig. 7A, variation due to factors other than the striking is reduced in the corrected rotation number shown in Fig. 7B. However, the rotational variation due to load variation (torque variation) still remains. For this reason, in the present method 2, the rotation number correction amount is derived by further considering the peak value, the frequency and the phase of torque (current) variation of the motor 3 during the execution of the drill mode, in addition to the peak value, the frequency and the phase of the supply voltage to the inverter circuit 47. In this way, the waveform can be further closer to the ideal waveform shown in Fig. 7C, as compared to a case where only the influence of the pulsation in the voltage supplied to the inverter circuit 47 is corrected. Thereby, single-shot mode function can be more accurately performed. Meanwhile, in Fig. 7B, the rotation number is decreased before striking starts. The reason is because load is increased as the screw is seated.

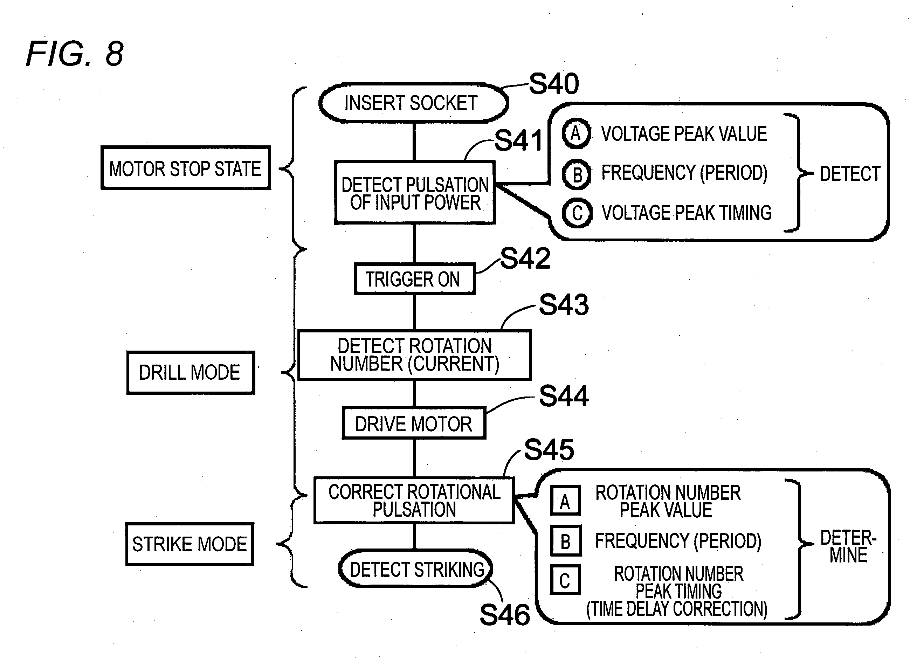

Specifically, description is made with reference to the flowchart of Fig. 8. A power plug of the electric tool 1 is connected to a commercial power supply by a user (S40). Input voltage (supply voltage) from the AC power supply 39 is converted to the full-wave rectification wave by the rectifier circuit 40 and supplied to the inverter circuit 47. At this time, voltage of the full-wave rectification wave is detected by the voltage detection circuit 52. Based on the output signal from the voltage detection circuit 52, the operation part 41 determines (detects) a voltage peak value, a frequency (a period between the voltage peak values) and a voltage peak timing (a phase) of the full-wave rectification wave supplied to the inverter circuit 47, from the full-wave rectification wave shown in Fig. 6A (S41). The process of S41 is performed in a state where the power plug is connected to the commercial power supply, that is, in a state where the motor 3 is stopped.

Next, when the trigger 6a is operated by a user (S42), the operation part 41 (the rotation number detection part 412) detects the rotation number of the motor 3 (S43). Alternatively, the current is detected through the current detection circuit 48. As the trigger 6a is operated, the motor 3 is activated and driven in the drill mode (S44). In the drill mode, since the pulsation of the rotation number due to the pulsation of the input voltage is corrected on the basis of the parameters (voltage peak value, period and phase) detected in S41 (S45), as shown in Fig. 6B, it is possible to suppress the pulsation of the rotation number due to the pulsation of the input voltage, as shown in Fig. 7B. Furthermore, when the rotation number correction amount (peak value), that is, the variation range of the correction amount is varied in accordance with a formula of the proportional constant times the voltage peak value, as shown in Fig. 6C, it is also possible to suppress the pulsation of the rotation number due to the load variation, as shown in Fig. 7C. Here, the proportional constant is varied in accordance with the torque (load current).

As a result, the pulsation of the rotation number of the motor 3 due to the pulsation of the input voltage can be corrected. Accordingly, since the rotation number is already corrected when the drill mode is migrated to the strike mode, it is possible to accurately detect the striking (S46).

Further, in the case where the rotation number correction amount is calculated on the basis of at least one of the torque and rotation number of the motor 3 during screw fastening in the drill mode and the supply voltage to the inverter circuit 47, it is possible to properly determine the average value (median value) or the variation range of the rotation number correction amount in accordance with the nature of material, as compared to a case where the same rotation number correction amount is used every times.

### Method 3. Correction of duty ratio

In this case, differences between the methods 1, 2 and the method 3 are mainly described and descriptions of common points therebetween are properly omitted. In the method 3, the rotation number of the motor 3 detected in the rotation number detection part 412 is not corrected but the pulsation of actual rotation number of the motor 3 is reduced. Also, the threshold rotation number is not corrected. Specifically, in the present method 3, the correction parameters derived by the correction parameter derivation part 411 are parameters for deriving a duty ratio correction amount (duty ratio correction amount varied in synchronous with the pulsation of voltage supplied to the inverter circuit 47) to correct a duty ratio (the percentage of on-time in each switching element of the inverter circuit 47) determined by the trigger operation amount (stroke) of the trigger switch 6 by a user. For example, the correction parameters include a median value, an amplitude, a frequency and a phase of the duty ratio correction amount. The duty ratio correction amount may be a correction amount which is added or subtracted from the duty ratio determined by the trigger operation amount or may be a correction factor which is multiplied thereto.

The flowchart of the method 1 shown in Fig. 3 can be similarly applied to the method 3 except that the contents of the correction parameters are different. When the correction parameters are calculated (S3 in Fig. 3), the inverter circuit 47 is controlled by a corrected duty ratio which is obtained by correcting the duty ratio determined by the trigger operation amount and the motor 3 is rotationally driven. Meanwhile, in a case where the correction parameter derivation part 411 determines a peak value, a frequency and a phase of voltage supplied to the inverter circuit 47 after the commercial power supply is supplied and before the screw fastening is started at the drill mode and calculates the correction parameters prior to the start of the screw fastening at the drill mode, the inverter circuit 47 is controlled by the corrected duty ratio from the beginning. During the execution of the strike mode, the rotation number condition determination part 413 compares the rotation number of the motor 3 detected in the rotation number detection part 412 and the threshold rotation number and determines whether the rotation number of the motor 3 falls below the threshold rotation number or not. In this instance, when the rotation number of the motor 3 falls below the threshold rotation number by three times (S7 in Fig. 3), the motor 3 is stopped (S9 in Fig. 3). The threshold rotation number may be constant over time.

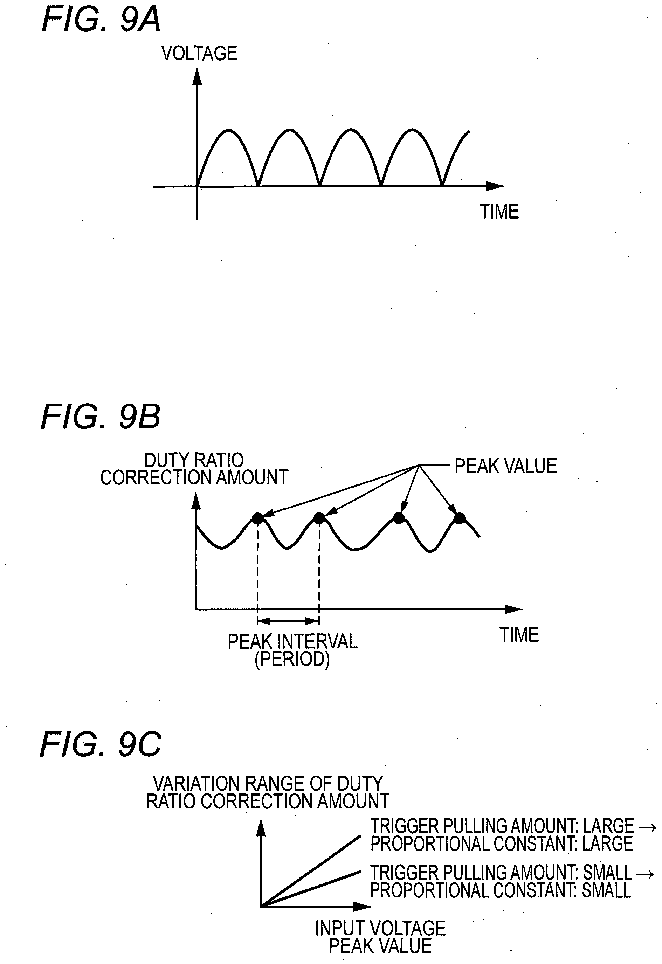

Fig. 9A is a waveform diagram of a drive voltage (voltage supplied to the inverter circuit 47) in the method 3 of the present embodiment, Fig. 9B is a graph showing the change of the duty ratio correction amount over time in the method 3, and Fig. 9C is a characteristic diagram showing a relationship between the peak value of voltage supplied to the inverter circuit 47 and the variation range of the duty ratio correction amount (when trigger pulling amount is large and when trigger pulling amount is small). The waveform of Fig. 9A is the same as that of Fig. 4A in the method 1. As shown in Fig. 9B, in the present embodiment, the duty ratio correction amount is varied over time. Here, the duty ratio correction amount is varied in a sinusoidal form. Variation cycle of the duty ratio correction amount is adapted to be consistent with the pulsation cycle of the full-wave rectification wave supplied to the inverter circuit 47. Further, mountains of the full-wave rectification wave and valleys of the duty ratio correction amount, and valleys of the full-wave rectification wave and mountains of the duty ratio correction amount are adapted to be substantially consistent with each other over time. The reason is as follows. Since the rotation number of the motor 3 is substantially synchronous with the variation of the full-wave rectification wave (since the mountains of the full-wave rectification wave and the mountains of the rotation number, and the valleys of the full-wave rectification wave and the valleys of the rotation number are substantially consistent with each other), it is possible to eliminate the influence of the variation of the full-wave rectification wave by causing the duty ratio (duty ratio correction amount) to be lower (to be in a valley) when the rotation number is higher (in a mountain) and causing the duty ratio (duty ratio correction amount) to be higher (to be in a mountain) when the rotation number is lower (in a valley). Thereby, the variation of the rotation number of the motor 3 due to the pulsation of the supply voltage (power) to the inverter circuit 47 is reduced when driven by the corrected duty ratio, as compared to the rotation number of the motor 3 when driven by the duty ratio before the correction. The variation range (amplitude) of the duty ratio correction amount is determined by the correction parameter derivation part 411 based on at least one of a peak value of the full-wave rectification wave, the torque and rotation number of the motor 3 during the execution of the drill mode and the trigger operation amount. For example, as shown in Fig. 9C, the peak value of the full-wave rectification wave and the variation range of the duty ratio correction amount have a proportional relationship and a proportional constant thereof is varied by the trigger operation amount (pulling amount). In this instance, there is positive correlation in which as the trigger operation amount is increased, the proportional constant is also increased. Further, there may be positive correlation in which as the torque (current) of the motor 3 during the execution of the drill mode is increased, the duty ratio correction amount is also increased. According to the method 3, as shown in Figs. 7B and 7C, it is possible to drive the motor 3 without the influence of variation of the full-wave rectification wave, similarly to the method 2.

Specifically, description is made with reference to the flowchart of Fig. 10. A power plug of the electric tool 1 is connected to a commercial power supply by a user (S50). Input voltage (supply voltage) from the AC power supply 39 is converted to the full-wave rectification wave by the rectifier circuit 40 and supplied to the inverter circuit 47. At this time, voltage of the full-wave rectification wave is detected by the voltage detection circuit 52. Based on the output signal from the voltage detection circuit 52, the operation part 41 determines (detects) a voltage peak value, a frequency (a period between the voltage peak values) and a voltage peak timing (a phase) of the full-wave rectification wave supplied to inverter circuit 47, from the full-wave rectification wave shown in Fig. 9A (S51). The process of S51 is performed in a state where the power plug is connected to the commercial power supply, that is, in a state where the motor 3 is stopped.

Next, when the trigger 6a is operated by a user (S52), the operation part 41 (the correction parameter derivation part 411) determines the correction value of the duty ratio in PWM signal of the switching elements Q1 to Q6 of the inverter circuit 47 based on the parameters (the voltage peak value, the period and the phase) detected in S51 (S53). For example, the duty ratio correction amount (peak value), that is, the variation range of the correction amount is determined by formula of the proportional constant times the voltage peak value, as shown in Fig. 9C. Here, the proportional constant is varied in accordance with the operation amount of the trigger 6a.

After the correction value of the duty ratio is determined, the operation part 41 performs the switching control of the switching elements Q1 to Q6 of the inverter circuit 47 by a predetermined PWM duty via the control signal output circuit 46 and therefore the motor 3 is driven (S54). These processes are performed in the drill mode where the hammer 24 and the protruding part of the anvil 30 are engaged with each other and rotated integrally.

When the motor 3 is driven in S54, the operation part 4 corrects the PWM duty by the correction value of the duty ratio determined in S53 (S55). As a result, the pulsation of the rotation number of the motor 3 due to the pulsation of the input voltage can be corrected. Accordingly, since the PWM duty is already corrected when the drill mode is migrated to the strike mode, it is possible to accurately detect the striking (S56).

According to the present method, following effects can be obtained.

Since the duty ratio correction amount is increased in accordance with the valleys of the full-wave rectification wave, it is possible to reduce or eliminate the decrease in the rotation number of the motor 3 due to the valleys of the full-wave rectification wave and therefore it is possible to reduce possibility that the decrease in the rotation number due to the valleys of the full-wave rectification wave is erroneously detected as the decrease by the striking, as compared to a case where the motor is driven by the duty ratio before the correction. Further, since the duty ratio correction amount is decreased in accordance with the mountains of the full-wave rectification wave, it is possible to reduce or eliminate the increase in the rotation number of the motor 3 due to the mountains of the full-wave rectification wave and therefore it is possible to reduce possibility that the rotational variation (that is, decrease in the rotation number) generated by the striking is overlooked due to the matching of mountains of the full-wave rectification wave and striking timing, as compared to a case where the motor is driven by the duty ratio before the correction. Accordingly, single-shot mode function can be accurately performed (that is, the motor 3 can be stopped at accurate striking times in the strike mode), so that it is possible to increase the precision of final screw fastening torque. For example, it is possible to prevent over-tightening or less-tightening of the screw.

Further, in the case where the duty ratio correction amount is calculated on the basis of at least one of the torque and rotation number of the motor 3 during screw fastening in the drill mode and the supply voltage to the inverter circuit 47, it is possible to properly determine the average value (median value) or the variation range of the duty ratio correction amount in accordance with the nature of material, as compared to a case where the same duty ratio correction amount is used every times.

As described above, according to the present embodiment, the correction parameters are newly introduced and therefore it is possible to reduce the influence of the pulsation of voltage supplied to the inverter circuit 47 on the rotation number variation of the motor 3. Accordingly, a configuration (smoothing-condenserless) that a smoothing-condenser is not provided or a smoothing-condenser having a small capacity is provided between the AC power supply 39 and the motor 3 may be employed and thus there are advantages in miniaturization or cost reduction.

While description has been made in connection with particular embodiments of the present invention, it will be obvious to those skilled in the art that various changes and modification may be made therein without departing from the present invention. A modification thereof will be described.

The variation of the correction parameters (varied threshold rotation number, corrected rotation number and corrected duty ratio) is not limited to the sinusoidal form but may be a triangular wave form or a full-wave rectification wave form.

A smoothing condenser may be provided between the AC power supply 39 and the motor 3. Also in this case, it is possible to reduce the influence of remaining pulsation on the rotation number variation of the motor 3. In the present embodiment, since the striking numbers in the strike mode are detected by the variation in the rotation number of the motor, a feed-back control to eliminate the variation in the rotation number of the motor is not performed in the strike mode. The reason is because the variation in the rotation number is also corrected when the feed-back control is performed and thus it is impossible to detect the striking numbers.

Further, although the inverter circuit is used as a motor drive circuit in the present embodiment, a motor drive circuit may be used in which the motor and switching elements (FET, etc.) are arranged in series and the motor is driven by turning on or off the switching elements, instead of the inverter circuit. Furthermore, although the electric tool is operated by power supplied from the commercial power supply in the present embodiment, DC power supply or other power supply may be used as long as the input voltage to the motor drive circuit is varied, instead of the commercial power supply.

Further, although the strike detection of the impact driver as the electric tool has been described as an example in the present embodiment, the preset invention can be applied to an electric tool in which the motor can be accurately driven without the influence of the pulsation in a case where the voltage inputted to the motor drive circuit is pulsated, regardless of the strike detection. Accordingly, the present invention can be applied to various electric tools such as a driver drill, a hammer drill, a round saw and a bush cutter. For example, the present invention is effective for an electric tool in which load condition is detected by the rotation number variation of the motor.

This application claims priority from Japanese Patent Application No. 2012-077319 filed on March 29, 2012.

### Industrial Applicability

According to an aspect of the invention, there is provided an electric tool capable of reducing variation in a rotation number of a motor due to pulsation of voltage supplied to a motor drive circuit.

## Claims

1. An electric tool (1) in which a pulsating input voltage is inputted to a drive circuit (47) of a motor (3),
**characterized in that** the electric tool (1) comprises:
a control part configured to vary output power or output voltage supplied to the motor (3) from the drive circuit (47) in accordance with the pulsation of the input voltage inputted to the drive circuit (47).

2. The electric tool (1) according to claim 1, wherein the control part is configured to vary the output power or the output voltage supplied to the motor (3) from the drive circuit (47) so as to be substantially synchronous with a pulsation cycle of the input voltage, and so that variation of a rotation number of the motor (3) due to the pulsation of the input voltage is reduced.

3. The electric tool according to claim 1, wherein the drive circuit (47) includes switching elements (Q1-Q6), and
wherein the control part is configured to control the switching elements (Q1-Q6) in accordance with the pulsation of the input voltage, and
wherein the control part is configured to vary the output power or the output voltage supplied to the motor (3) from the drive circuit (47) in accordance with the pulsation of the input voltage inputted to the drive circuit (47) so that variation of a rotation number of the motor (3) due to the pulsation of the input voltage is reduced.

4. The electric tool according to claim 3, wherein the control part is configured to control the switching elements (Q1-Q6) by a PWM signal and vary a duty ratio of the PWM signal in accordance with the pulsation of the input voltage.

5. The electric tool (1) of claim 1, wherein the pulsating input voltage is supplied from an AC power supply (39),
the motor drive circuit (47) is a motor drive circuit configured to drive the motor (3),
the control part is configured to control the motor drive circuit (47); and
the electric tool (1) further comprises:
a rotation speed detection unit (412) configured to detect a rotation speed of the motor (3),
wherein the control part includes:
a PWM control unit (46) configured to control switching elements of the motor drive circuit by a PWM signal,
a correction parameter generating unit (411) configured to generate a correction parameter for varying a duty ratio of the PWM signal to reduce variation in the rotation speed of the motor (3) due to pulsation of voltage supplied to the motor drive circuit (47), and
a rotation speed condition determining unit (413) configured to determine whether the rotation speed of the motor (3) detected by the rotation speed detection unit (412) satisfies a predetermined condition or not.

6. The electric tool (1) according to claim 5, wherein the correction parameter generating unit (411) is configured to derive the correction parameter based on a frequency and a phase of the voltage supplied to the motor drive circuit (47).

7. The electric tool (1) according to claim 5, wherein the variation range of the duty ratio of the PWM signal is configured to be increased by the correction parameter as an amplitude of the voltage supplied to the motor drive circuit (47) becomes larger.

8. The electric tool (1) according to claim 3, wherein the variation range of the duty ratio of the PWM signal is configured to be increased by the correction parameter as an operation amount of an input part (6a) by a user becomes greater.

9. The electric tool (1) according to claim 3, wherein the rotation speed condition determining unit (413) is configured to determine whether the rotation speed of the motor (3) detected by the rotation speed detection unit (412) falls below a threshold rotation speed or not, and
wherein the control part is configured to stop the motor (3) when a number of determination that the rotation speed of the motor (3) detected by the rotation speed detection unit (412) falls below the threshold rotation speed is not less than predetermined number.

10. The electric tool (1) according to claim 3, further comprising a rotation transmission mechanism (21, 30) configured to transmit the rotation of the motor (3) to a tip tool, wherein the rotation transmission mechanism (21, 30) is configured to operate in:
a drill mode where the tip tool is continuously rotated by the rotation of the motor (3), and
a strike mode where the tip tool is rotated by a rotational striking force using the rotation of the motor (3) when torque of the motor (3) exceeds a predetermined value, and
wherein the correction parameter generating unit (411) is configured to derive the correction parameter after a power supply is turned on or during the execution of the drill mode.

11. The electric tool (1) according to claim 3, further comprising a rectifier circuit (40) configured to rectify power supplied from the AC power supply (39) and to supply the rectified power to the motor drive circuit (47).

12. The electric tool (1) according to claim 3, wherein a smoothing condenser is not provided between the AC power supply (39) and the motor (3).

13. The electric tool (1) according to claim 1, further comprising:
a position detection element (42) configured to detect a rotation position of a rotor (3a) of the motor (3).

14. The electric tool (1) according to claim 1, further comprising:
a forward/reverse switching lever (10) configured to switch a rotation direction of the motor (3).

15. A fastening method by an electric tool (1), the method comprising:
a drill mode step in which a tip tool is continuously rotated by rotating a motor (3) by pulsating drive voltage and a fastening member is tightened by the tip tool;
a correction parameter derivation step in which a correction parameter for varying a duty ratio of a PWM signal for driving switching elements (Q1-Q6) of a motor drive circuit (47) to reduce variation in the rotation speed of the motor (3) due to pulsation of the drive voltage is derived, after a power supply (39) is turned on or during the drill mode step;
a strike mode step in which the tip tool is rotated by a rotational striking force using the rotation of the motor (3) and the fastening member is further tightened by the tip tool, after the drill mode step; and
a rotation speed condition determining step in which whether the rotation speed of the motor (3) satisfies a predetermined condition or not is determined, during the strike mode step,
wherein the correction parameter is derived in the correction parameter derivation step, on the basis of a frequency and a phase of voltage supplied to the motor drive circuit (47).

16. The fastening method according to claim 15, wherein the rotation of the motor (3) is stopped when a number of determination that the rotation speed of the motor (3) satisfies the predetermined condition is not less than a predetermined number.

## Patentansprüche

1. Elektrisches Werkzeug (1), bei dem eine pulsierende Eingangsspannung in eine Ansteuerschaltung (47) eines Motors (3) eingegeben wird,
**dadurch gekennzeichnet, dass** das elektrische Werkzeug (1) umfasst:
ein Steuerteil, das konfiguriert ist, die Ausgangsleistung oder Ausgangsspannung, die dem Motor (3) von der Ansteuerschaltung (47) zugeführt wird, in Übereinstimmung mit dem Pulsieren der Eingangsspannung, die der Ansteuerschaltung (47) eingegeben wird, zu variieren.

2. Elektrisches Werkzeug (1) nach Anspruch 1, wobei das Steuerteil konfiguriert ist, die Ausgangsleistung oder die Ausgangsspannung, die dem Motor (3) von der Ansteuerschaltung (47) zugeführt wird, derart zu variieren, dass sie im Wesentlichen synchron mit einem Pulsationszyklus der Eingangsspannung ist, und derart, dass eine Veränderung einer Drehzahl des Motors (3) aufgrund des Pulsierens der Eingangsspannung reduziert wird.

3. Elektrisches Werkzeug nach Anspruch 1, wobei die Ansteuerschaltung (47) Schaltelemente (Q1-Q6) enthält, und
wobei das Steuerteil konfiguriert ist, die Schaltelemente (Q1-Q6) in Übereinstimmung mit dem Pulsieren der Eingangsspannung zu steuern, und
wobei das Steuerteil konfiguriert ist, die Ausgangsleistung oder die Ausgangsspannung, die dem Motor (3) von der Ansteuerschaltung (47) zugeführt wird, in Übereinstimmung mit dem Pulsieren der Eingangsspannung, die der Ansteuerschaltung (47) eingegeben wird, zu variieren, so dass die Veränderung einer Drehzahl des Motors (3) aufgrund des Pulsierens der Eingangsspannung reduziert wird.

4. Elektrisches Werkzeug nach Anspruch 3, wobei das Steuerteil konfiguriert ist, die Schaltelemente (Q1-Q6) durch ein PWM-Signal zu steuern und ein Tastverhältnis des PWM-Signals in Übereinstimmung mit dem Pulsieren der Eingangsspannung zu variieren.

5. Elektrisches Werkzeug (1) nach Anspruch 1, bei welchem die pulsierende Eingangsspannung von einer Wechselstromversorgung (39) zugeführt wird,
wobei die Motoransteuerschaltung (47) eine Motoransteuerschaltung ist, die konfiguriert ist, den Motor (3) anzutreiben,
wobei das Steuerteil konfiguriert ist, die Motoransteuerschaltung (47) zu steuern; und
wobei das elektrische Werkzeug (1) ferner umfasst:
eine Drehzahlerfassungseinheit (412), die konfiguriert ist, eine Drehzahl des Motors (3) zu erfassen,
wobei das Steuerteil enthält:
eine PWM-Steuereinheit (46), die konfiguriert ist, Schaltelemente der Motoransteuerschaltung durch ein PWM-Signal zu steuern,
eine Korrekturparameter-Erzeugungseinheit (411), die konfiguriert ist, einen Korrekturparameter zum Variieren eines Tastverhältnisses des PWM-Signals zu erzeugen, um eine Variation der Drehzahl des Motors (3) aufgrund des Pulsierens der Spannung, die der Motoransteuerschaltung (47) zugeführt wird, zu reduzieren, und
eine Drehzahlzustand-Bestimmungseinheit (413), die konfiguriert ist, zu bestimmen, ob die von der Drehzahlerfassungseinheit (412) erfasste Drehzahl des Motors (3) eine vorbestimmte Bedingung erfüllt oder nicht.

6. Elektrisches Werkzeug (1) nach Anspruch 5, wobei die Korrekturparameter-Erzeugungseinheit (411) konfiguriert ist, den Korrekturparameter basierend auf einer Frequenz und einer Phase der Spannung, die der Motoransteuerschaltung (47) zugeführt wird, abzuleiten.

7. Elektrisches Werkzeug (1) nach Anspruch 5, wobei der Variationsbereich des Tastverhältnisses des PWM-Signals konfiguriert ist, durch den Korrekturparameter erhöht zu werden, wenn eine Amplitude der Spannung, die der Motoransteuerschaltung (47) zugeführt wird, zunimmt.

8. Elektrisches Werkzeug (1) nach Anspruch 3, wobei der Variationsbereich des Tastverhältnisses des PWM-Signals konfiguriert ist, durch den Korrekturparameter erhöht zu werden, wenn eine Betriebsgrösse eines Eingabeteils (6a) durch einen Benutzer größer wird.

9. Elektrisches Werkzeug (1) nach Anspruch 3, wobei die Drehzahlzustand-Bestimmungseinheit (413) konfiguriert ist, zu bestimmen, ob die von der Drehzahlerfassungseinheit (412) erfasste Drehzahl des Motors (3) unter einen Drehzahl-Schwellenwert fällt oder nicht, und
wobei das Steuerteil konfiguriert ist, den Motor (3) anzuhalten, wenn eine Anzahl von Bestimmungen, dass die von der Drehzahlerfassungseinheit (412) erfasste Drehzahl des Motors (3) unter den Drehzahl-Schwellenwert fällt, nicht kleiner als eine vorbestimmte Anzahl ist.

10. Elektrisches Werkzeug (1) nach Anspruch 3, ferner umfassend einen Drehübertragungsmechanismus (21, 30), der konfiguriert ist, die Umdrehung des Motors (3) an ein Spitzenwerkzeug zu übertragen, wobei der Drehübertragungsmechanismus (21, 30) konfiguriert ist zum Betrieb in:
einem Bohrmodus, in dem das Spitzenwerkzeug kontinuierlich durch die Umdrehung des Motors (3) gedreht wird, und
einem Schlagmodus, bei dem das Spitzenwerkzeug durch eine Drehschlagkraft unter Ausnutzung der Umdrehung des Motors (3) gedreht wird, wenn ein Drehmoment des Motors (3) einen vorbestimmten Wert überschreitet, und
wobei die Korrekturparameter-Erzeugungseinheit (411) konfiguriert ist, den Korrekturparameter nach dem Einschalten einer Stromversorgung oder während der Ausführung des Bohrmodus abzuleiten.

11. Elektrisches Werkzeug (1) nach Anspruch 3, ferner umfassend eine Gleichrichterschaltung (40), die konfiguriert ist, die von der Wechselstromversorgung (39) zugeführte Leistung gleichzurichten und die gleichgerichtete Leistung der Motoransteuerschaltung (47) zuzuführen.

12. Elektrisches Werkzeug (1) nach Anspruch 3, wobei kein Glättungskondensator zwischen der Wechselstromversorgung (39) und dem Motor (3) vorgesehen ist.

13. Elektrisches Werkzeug (1) nach Anspruch 1, ferner umfassend:
ein Positionserfassungselement (42), das konfiguriert ist, eine Drehposition eines Rotors (3a) des Motors (3) zu erfassen.

14. Elektrisches Werkzeug (1) nach Anspruch 1, ferner umfassend:
einen Vorwärts/Rückwärts-Umschalthebel (10), der konfiguriert ist, eine Drehrichtung des Motors (3) umzuschalten.

15. Befestigungsverfahren durch ein elektrisches Werkzeug (1), wobei das Verfahren umfasst:
einen Bohrmodus-Schritt, in dem ein Spitzenwerkzeug durch Umdrehung eines Motors (3) durch pulsierende Ansteuerspannung kontinuierlich gedreht wird und ein Befestigungselement durch das Spitzenwerkzeug angezogen wird;
einen Korrekturparameter-Ableitungs-Schritt, in dem ein Korrekturparameter zum Verändern eines Tastverhältnisses eines PWM-Signals zum Ansteuern von Schaltelementen (Q1-Q6) einer Motoransteuerschaltung (47), um eine Veränderung der Drehzahl des Motors (3) aufgrund eines Pulsierens der Ansteuerspannung zu reduzieren, abgeleitet wird, nachdem eine Stromversorgung (39) eingeschaltet ist oder während des Bohrmodus-Schrittes;
einen Schlagmodus-Schritt, in dem das Spitzenwerkzeug durch eine Drehschlagkraft unter Ausnutzung der Umdrehung des Motors (3) gedreht wird und das Befestigungselement durch das Spitzenwerkzeug weiter angezogen wird, nach dem Bohrmodus-Schritt; und
einen Drehzahlzustand-Bestimmungs-Schritt, in dem bestimmt wird, ob die Drehzahl des Motors (3) eine vorbestimmte Bedingung erfüllt oder nicht, während des Schlagmodus-Schrittes,
wobei der Korrekturparameter in dem Korrekturparameter-Ableitungs-Schritt basierend auf einer Frequenz und einer Phase der Spannung, die der Motoransteuerschaltung (47) zugeführt wird, abgeleitet wird.

16. Befestigungsverfahren nach Anspruch 15, wobei die Umdrehung des Motors (3) angehalten wird, wenn eine Anzahl von Bestimmungen, dass die Drehzahl des Motors (3) die vorbestimmte Bedingung erfüllt, nicht kleiner als eine vorbestimmte Anzahl ist.

## Revendications

1. Outil électrique (1) dans lequel une tension d'entrée pulsatoire est entrée jusqu'à un circuit pilote (47) d'un moteur (3),
**caractérisé en ce que** l'outil électrique (1) comprend :
une partie de commande configurée pour faire varier la puissance de sortie ou la tension de sortie alimentée au moteur (3) depuis le circuit pilote (47) en accord avec la pulsation de la tension d'entrée entrée jusqu'au circuit pilote (47).

2. Outil électrique (1) selon la revendication 1, dans lequel la partie de commande est configurée pour faire varier la puissance de sortie ou la tension de sortie alimentée au moteur (3) depuis le circuit pilote (47) de manière à être sensiblement synchrone avec un cycle de pulsation de la tension d'entrée, et de sorte qu'une variation d'un nombre de rotations du moteur (3) dues à la pulsation de la tension d'entrée est réduite.

3. Outil électrique selon la revendication 1, dans lequel le circuit pilote (47) inclut des éléments de commutation (Q1-Q6), et
dans lequel la partie de commande est configurée pour commander les éléments de commutation (Q1-Q6) en accord avec la pulsation de la tension d'entrée, et
dans lequel la partie de commande est configurée pour faire varier la puissance de sortie ou la tension de sortie alimentée au moteur (3) depuis le circuit pilote (47) en accord avec la pulsation de la tension d'entrée entrée jusqu'au circuit pilote (47) de sorte qu'une variation d'un nombre de rotations du moteur (3) dues à la pulsation de la tension d'entrée est réduite.

4. Outil électrique selon la revendication 3, dans lequel la partie de commande est configurée pour commander les éléments de commutation (Q1-Q6) via un signal de modulation de largeur d'impulsion (PWM) et pour faire varier un rapport de service du signal PWM en accord avec la pulsation de la tension d'entrée.

5. Outil électrique (1) selon la revendication 1, dans lequel la tension d'entrée pulsatoire est alimentée depuis une alimentation de puissance en courant alternatif (CA) (39),
le circuit pilote de moteur (47) est un circuit pilote de moteur configuré pour piloter le moteur (3),
la partie de commande est configurée pour commander le circuit pilote de moteur (47) ; et
l'outil électrique (1) comprend en outre :
une unité de détection de vitesse de rotation (412) configurée pour détecter une vitesse de rotation du moteur (3),
dans lequel la partie de commande inclut :
une unité de commande PWM (46) configurée pour commander des éléments de commutation du circuit pilote de moteur via un signal PWM,
une unité de génération de paramètre de correction (411) configurée pour générer un paramètre de correction destiné à faire varier un rapport de service du signal PWM pour réduire une variation dans la vitesse de rotation du moteur (3) due à la pulsation de tension alimentée au circuit pilote de moteur (47), et
une unité de détermination de condition de vitesse de rotation (413) configurée pour déterminer si la vitesse de rotation du moteur (3) détectée par l'unité de détection de vitesse de rotation (412) satisfait ou non une condition prédéterminée.

6. Outil électrique (1) selon la revendication 5, dans lequel l'unité de génération de paramètre de correction (411) est configurée pour dériver le paramètre de correction sur la base d'une fréquence et d'une phase de la tension alimentée au circuit pilote de moteur (47).

7. Outil électrique (1) selon la revendication 5, dans lequel la plage de variation du rapport de service du signal PWM est configurée pour être augmentée par le paramètre de correction quand une amplitude de la tension alimentée au circuit pilote de moteur (47) devient plus grande.

8. Outil électrique (1) selon la revendication 3, dans lequel la plage de variation du rapport de service du signal PWM est configurée pour être augmentée par le paramètre de correction quand une quantité d'actionnement d'une partie d'entrée (6a) de la part d'un utilisateur devient plus grande.

9. Outil électrique (1) selon la revendication 3, dans lequel l'unité de détermination de condition de vitesse de rotation (413) est configurée pour déterminer si la vitesse de rotation du moteur (3) détectée par l'unité de détection de vitesse de rotation (412) tombe ou non en dessous d'une vitesse de rotation seuil, et
dans lequel la partie de commande est configurée pour arrêter le moteur (3) quand un nombre de détermination selon lequel la vitesse de rotation du moteur (3) détectée par l'unité de détection de vitesse de rotation (412) tombe en dessous de la vitesse de rotation seuil n'est pas inférieur à un nombre prédéterminé.

10. Outil électrique (1) selon la revendication 3, comprenant en outre un mécanisme de transmission de rotation (21, 30) configuré pour transmettre la rotation du moteur (3) à un outil d'embout, dans lequel le mécanisme de transmission de rotation (21, 30) est configuré pour fonctionner dans :
un mode de perçage dans lequel l'outil d'embout est mis en rotation en continu par la rotation du moteur (3), et
un mode de percussion dans lequel l'outil d'embout est mis en rotation par une force de percussion rotative en utilisant la rotation du moteur (3) quand le couple du moteur (3) excède une valeur prédéterminée, et
dans lequel l'unité de génération de paramètre de correction (411) est configurée pour dériver le paramètre de correction après qu'une puissance d'alimentation est activée ou pendant l'exécution du mode de perçage.

11. Outil électrique (1) selon la revendication 3, comprenant en outre un circuit redresseur (40) configuré pour redresser une puissance alimentée depuis l'alimentation de puissance CA (39) et pour alimenter la puissance redressée au circuit pilote de moteur (47).

12. Outil électrique (1) selon la revendication 3, dans lequel un condensateur de lissage n'est pas prévu entre l'alimentation de puissance CA (39) et le moteur (3).

13. Outil électrique (1) selon la revendication 1, comprenant en outre :
un élément de détection de position (42) configuré pour détecter une position de rotation d'un rotor (3a) du moteur (3).

14. Outil électrique (1) selon la revendication 1, comprenant en outre :
un levier de commutation avant/arrière (10) configuré pour commuter une direction de rotation du moteur (3).

15. Procédé de fixation par un outil électrique (1), le procédé comprenant :
une étape en mode de perçage dans laquelle un outil d'embout est mis en rotation en continu par rotation d'un moteur (3) via une tension pilote de pulsation et un élément de fixation est attaché par l'outil d'embout ;
une étape de dérivation de paramètre de correction dans laquelle un paramètre de correction destiné à faire varier un rapport de service d'un signal PWM destiné à piloter des éléments de commutation (Q1 Q6) d'un circuit pilote de moteur (47) pour réduire une variation dans la vitesse de rotation du moteur (3) due à la pulsation de la tension pilote est dérivé, après qu'une alimentation de puissance (39) est activée ou pendant l'étape en mode de perçage ;
une étape en mode de percussion dans laquelle l'outil d'embout est mis en rotation par une force de percussion rotative en utilisant la rotation du moteur (3) et l'élément de fixation est en outre serré par l'outil d'embout, après l'étape en mode de perçage ; et
une étape de détermination de condition de vitesse de rotation dans laquelle il est déterminé si la vitesse de rotation du moteur (3) satisfait ou non une condition prédéterminée, pendant l'étape en mode de percussion,
dans lequel le paramètre de correction est dérivé dans l'étape de dérivation de paramètre de correction, sur la base d'une fréquence et d'une phase d'une tension alimentée au circuit pilote de moteur (47).

16. Procédé de fixation selon la revendication 15, dans lequel la rotation du moteur (3) est arrêtée quand un nombre de détermination selon lequel la vitesse de rotation du moteur (3) satisfait la condition prédéterminée n'est pas inférieur à un nombre prédéterminé.
